# EUROPEAN PATENT APPLICATION

(11) **EP 2 474 881 A2**
(43) Date of publication of application: **11.07.2012**
(21) Application number: 11193818.9
(22) Date of filing: 15.12.2011
(51) Int. Cl.: G06F 3/00, G06F 3/01

(54) **Display apparatus controlled by a motion, and motion control method thereof**

(30) Priority: 06.01.2011 KR 20110001524
(71) Applicant: Samsung Electronics Co., Ltd., Suwon-si, Gyeonggi-do 442-742 (KR)
(72) Inventor: Ryu, Hee-seob, Gyeonggi-do (KR); Park, Seung-Kwon, Gyeonggi-do (KR); Jeong, Ki-jun, Seoul (KR); Lee, Dong-ho, Seoul (KR)
(74) Representative: Misselbrook, Paul

(57) **Abstract**

A display apparatus includes a motion recognition unit which recognizes a movement of an object located outside the display apparatus, a storage unit which stores therein information about the operation corresponding to each motion; and a control unit which divides a movement recognition period using a movement nonrecognition period, determines a motion corresponding to a movement of the object within the movement recognition period, and performs an operation corresponding to the determined motion according to information stored in the storage unit.

## Description

Apparatuses and methods consistent with the disclosure provided herein relate to displaying an image and controlling a motion, and more particularly, to a display apparatus with improved accuracy of motion recognition and a motion control method thereof.

Continuous development of electronic technologies has enabled introduction of a variety of state-of-the-art electronic devices to the market. The more recent technologies are applied to recent products to provide greater convenience and efficiency of use. These technologies may include motion recognition and voice recognition technologies.

'Motion recognition' technology largely relates to sensing a motion, i.e., a movement of a user through a motion sensor or the like, and utilizing the sensed result.

Such recognition technologies provide convenience to users, but can have shortcomings. That is, if a motion or voice command is inputted inaccurately, an unintended function may be executed or the command may not be inputted at all, inconveniencing the user by requiring him to input the intended command several times until the right input is made.

Accordingly, instead of a motion that a user might frequently make without intending to input a command, it will be preferable to set a more discernable motion as a command. Currently, the hand motion is the general way of inputting motion control. However, there are a limited number of ways to make hand motions. For example, it is sometimes difficult to discern hand motions such as hand waving, moving to a certain direction, swinging as if turning a page of a book, or the like.

Accordingly, a method is necessary, with allows a variety of motions to be recognized with accuracy.

Exemplary embodiments of the present inventive concept overcome the above disadvantages and other disadvantages not described above. Also, the present inventive concept is not required to overcome the disadvantages described above, and an exemplary embodiment of the present inventive concept may not overcome any of the problems described above.

According to one embodiment, a display apparatus and a motion control method thereof, which improve accuracy of motion recognition, are provided.

In one embodiment, a display apparatus may include a motion recognition unit which recognizes a movement of an object located outside the display apparatus, and a control unit which divides and recognizes the movement in each unit time by using a preset time interval, if the object makes the movement, determines a motion corresponding to the movement in each unit time using direction, frequency, distance and speed of the movement in each unit time, and performs an operation according to the determined motion.

The display apparatus may additionally include a storage unit which stores therein information about the operation corresponding to each motion, and an output unit which performs displaying according to a control by the control unit.

If the movement is determined to be a moving motion based on the speed of the movement, the control unit extends a value of the unit time during which the moving motion is made, omits the use of the time interval, and controls the output unit to move a pointer on a screen according to a direction of the movement of the moving motion.

The control unit determines the movement to be one wave motion, if the object performs a plurality of reciprocating movements in the unit time.

The control unit controls the output unit to change to a previous or upper screen, if it determines the movement to be the wave motion.

The control unit determines the movement to be one swing motion, if the object moves with acceleration to one direction and then stops in the unit time.

The control unit performs an operation of changing a channel or page, if it determines the movement to be the swing motion.

The time interval is a fixed time division which is arranged between two unit times and during which the movement is not recognized, and the time interval is set to a value ranging between 250 msec and 350 msec, and the unit time is a fixed time required for recognizing one motion, and set to a value ranging from 1 to 1.5 seconds.

According to one embodiment, a motion control method of a display apparatus may include recognizing a movement of an object located outside the display apparatus, dividing and recognizing the movement per each unit time by using a preset time interval, determining a motion corresponding to the movement in each unit time using direction, frequency, distance and speed of the movement in each unit time, and performing an operation according to the determined motion.

The determining the motion may include determining the movement to be a moving motion if the movement is made at a constant speed, extending a value of the unit time during which the moving motion is made, and omitting the use of the time interval, and the performing the operation may include moving a pointer on a screen according to a direction of the movement of the moving motion.

The determining the motion may include determining the movement to be one wave motion, if the object performs a plurality of reciprocating movements in the unit time.

The performing the operation may include changing to a previous or upper screen, if the movement is determined to be the wave motion.

The determining the motion may include determining the movement to be one swing motion, if the object moves with acceleration to one direction and then stops in the unit time.

The performing the operation may include performing an operation of changing a channel or page, if the movement is determined to be the swing motion.

The time interval is a fixed time division which is arranged between two unit times and during which the movement is not recognized, and the time interval is set to a value ranging between 250 msec and 350 msec, and the unit time is a fixed time required for recognizing one motion, and set to a value ranging from 1 to 1.5 seconds.

Since the recognition rate is increased for some motions that can be easily misinterpreted, user convenience improves.

The above and/or other aspects of the present inventive concept will be more apparent by describing certain exemplary embodiments of the present inventive concept with reference to the accompanying drawings, in which:

FIG. 1 is a block diagram of a display apparatus according to an embodiment;

FIG. 2 is a detailed block diagram of a display apparatus to explain various embodiments;

FIG. 3 is provided to explain a process of determining a moving motion according to an embodiment;

FIG. 4 is provided to explain a process of determining a swing motion according to an embodiment;

FIG. 5 is provided to explain a process of determining a wave motion according to an embodiment;

FIG. 6 is provided to explain a push motion to start a motion recognition mode according to an embodiment;

FIGS. 7 and 8 are views illustrating various examples of motions signaling to finish the motion recognition mode, according to an embodiment;

FIGS. 9 and 10 are flowcharts provided to explain a motion control method of a display apparatus, according to various embodiments; and

FIGS. 11 and 12 are views illustrating various examples of unit time and time intervals.

Certain exemplary embodiments of the present inventive concept will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the present inventive concept. Accordingly, it is apparent that the exemplary embodiments of the present inventive concept can be carried out without those specifically defined matters. Also, well-known functions or constructions are not described in detail since they would obscure the invention with unnecessary detail.

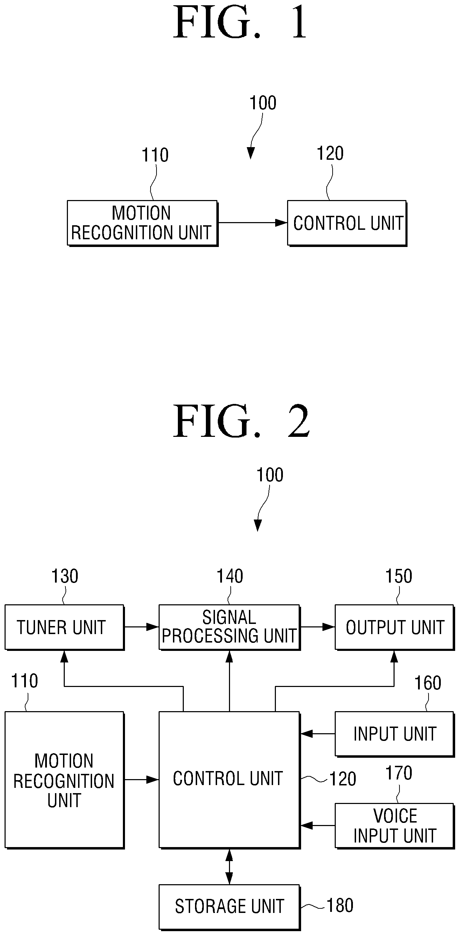

FIG. 1 is a block diagram of a display apparatus according to an embodiment. The display apparatus may be implemented, for example, as a TV, a mobile phone, a monitor, a laptop PC, an electronic frame, an electronic book, a PDA, or a navigation system.

Referring to FIG. 1, the display apparatus 100 includes a motion recognition unit 110 and a control unit 120.

The motion recognition unit 110 may operate to recognize a motion of an external object. To be specific, the motion recognition unit 110 senses a movement of a user intending to use the display apparatus 100.

To this purpose, the motion recognition unit 110 may include a photographing means such as a camera. The motion recognition unit 110 photographs an object (such as a user) located within a photographing range, and provides the control unit 120 with the photographed image data.

The control unit 120 analyzes the photographed image data, recognizes the motion of the user, and executes an operation according to the analyzed result.

In one example, the control unit 120 may recognize the user movement using a preset time interval, i.e., based on unit time. To be specific, the control unit 120 may recognize the user movement for a preset unit time, and upon elapse of the unit time, the control unit 120 may stop recognizing the user movement or ignore the movement for a preset time interval. Accordingly, the present specification may refer to the unit time as a movement recognition period and the time interval as a movement nonrecognition period.

If the user movement is recognized based on one unit time, the control unit 120 can determine a motion corresponding to the recognized movement using a direction, frequency, distance and speed of such movement within the unit time. The control unit 120 may then execute an operation according to the determined motion.

The operation executed by the control unit 120 may include power on/off, execution of various functions, or adjustment of attributes of the display apparatus 100.

A variety of motions may be set. To be specific, motions and user movements may be matched and stored in the display apparatus 100 in the following table.

**Table 1**

| Motion | Operation |
|---|---|
| Push motion | Entering into motion recognition mode |
| End motion | Ending motion recognition mode |
| Moving motion | Moving cursor or focus |
| Swing motion | Changing page or channel |
| Wave motion | Changing to upper or previous page |
| Hold | Selecting |

Referring to Table 1, the 'push' motion corresponds to a movement of a user moving his hand in a direction towards the display apparatus 100. When the push motion is recognized, the control unit 120 recognizes a motion following after the recognized motion, and executes a corresponding operation. The push motion may include a push-pull motion in which the user unfolds his hand and then folds again, a push-stop motion in which the user keeps unfolding his hand, or the like.

The 'end' motion is a motion to end the motion recognition mode. A variety of end motions may be set. For example, if the user's hand is an object, the end motion may include the object touching a user's body or other objects so that the user's hand is not recognized any more. This will be explained in greater detail below with reference to corresponding drawings.

The 'moving' motion is a motion to move an object such as a hand in a predetermined direction. When the moving motion is made, the control unit 120 moves cursor, or menu focus according to the designated direction and speed.

The 'swing' motion is a motion to swing a hand unfolded to the direction of the display apparatus 100 in a predetermined direction. The swing motion may also be called a swipe motion. The control unit 120 may change the current page or channel to the next page or channel according to the direction of swing motion.

The 'wave' motion is a motion to wave a hand unfolded toward the direction of the display apparatus 100. The wave motion may also be called a shake motion. When the wave motion is recognized, the control unit 120 may change the currently-displayed page or broadcast screen to the previous page or broadcast screen, or to the upper page if there is upper page above the current page.

The 'hold' motion refers to a motion of keeping a hand in a still state for a predetermined time. If the hold motion is made when the cursor or focus is located on an arbitrary menu, the control unit 120 recognizes that the corresponding menu is selected so that the control unit 120 selects the menu and performs a function thereof.

Although the specific matching relationship between the motions and operations has been explained above, this is provided only for illustrative purposes. Accordingly, the matching relationship may vary as necessary. Additionally, various other motions including circle-, letter-, number- or symbol-drawing motions and operations corresponding to such motions may be provided, and some of the motions in the above table may be omitted.

Meanwhile, except for the push, end and hold motions, the rest of the motions may be executed by different variable units depending on the speed or range in which the movement is made. For example, generally, a channel or page may be changed or the volume may be adjusted by one variation unit at each adjustment, such as change of one channel, one page or one level of volume. Such a method of motion control can be inconvenient since the user has to make motions several times to effect a plurality of units of adjustments. To improve such inconvenience, the amount of variation of the operation may be varied by varying the speed or distance of a corresponding motion.

The moving motion, for example, may be made fast, in which case the cursor or focus movement or speed accelerates. If the swing motion is made fast or at a wide width, the page or channel can be adjusted at a greater increment, such as five or ten pages or channels at a time. The wave motion may also be made in a similar manner to increase the amount of variation according to the speed or width of making wave motion.

Meanwhile, among other motions, the moving, swing and wave motions are made within a limited range and thus can be difficult to discern. For example, while a user intends to turn a page when he makes swing motion, the display apparatus 100 may recognize the inputted motion as the moving motion and move a focus instead of changing a page.

Further, as the swing motion is made in a forward direction, the user has to return his hand to the initial position (i.e., move it in a backward direction) to make the next swing motion. There is a possibility that the user's movement is unintentionally recognized as successive forward and backward swing motions although the user intends to make one-directional swing motion for a plurality of times.

Accordingly, the control unit 120 may set a time interval among the unit times so that the movement recognition is not performed or ignored during the set time intervals. For example, if the user makes a plurality of swing motions, the first swing of the user's hand in the forward direction is made in one unit time, and the following movement of the user's hand in a backward direction to return to the original position is made during the time interval. The second effective swing motion may then be recognized at the following unit time. As a result, the control unit 120 may discriminately recognize the successive movements.

The value of the unit time and time interval may be set in advance based on measurements obtained through tests on general speed and time of the user's movement. For example, the time interval may be set between 250 msec and 350 msec. Further, the unit time, which is the fixed time provided for recognition of one motion, may be set between 1 to 1.5 seconds.

If the unit time is set to 1.2 seconds and the time interval is set to 300 msec, the control unit 120 may start tracking and analyzing a corresponding movement upon initiation of the movement for the duration of 1.2 seconds, enter into standby mode in which the control unit 120 stops tracking a movement upon elapse of 1.2 seconds for the duration of 300 msec, and re-start tracking a movement upon elapse of 300 msec for the duration of 1.2 seconds. As a result, the control unit 120 may discriminately determine a motion based on unit times.

To be specific, a user may repeatedly move his hand (i.e., object) to one and opposite directions in a wave motion. Such repeated movements may be made fast enough to be completed within one unit time. The control unit 120 may determine a location of the object for each frame photographed at the motion recognition unit 110, and count one reciprocal movement if the object completes a series of moving to a predetermined direction, stopping and returning to the opposite direction. Accordingly, if determining that a predetermined number (e.g., two or more) of reciprocal movements are made within one unit time, the control unit 120 determines that the wave motion is made. After that, if determining that the preset number of reciprocal movements are made after the time interval, the control unit 120 determines that two wave motions are made successively. Accordingly, the control unit 120 performs a corresponding operation two times repeatedly. To be specific, the control unit 120 may cause the screen to change to the upper screen as described in Table 1 above. The 'upper screen' herein may refer to upper content of the currently-displayed content such as upper menu screen, or upper page.

As an additional example, the user moves his hand (i.e., object) to one direction and stops it in a swing motion. Generally, a swing motion adds speed as it is made. Accordingly, the control unit 120 initially determines that a moving motion is made upon movement of the hand, and then determines that a swing motion is made if the movement adds speed and suddenly stops. If one swing motion is recognized, the control unit 120 performs a corresponding operation, stands by for the next time interval, and re-determines the movement in the following unit time. If the swing motion is made as explained above, the control unit 120 performs an operation of changing a page or channel.

Meanwhile, if a recognized movement is made within a predetermined range at a constant speed, i.e., without acceleration, the control unit 120 determines that a moving motion is made. The moving motion is generally used to command a movement of a pointer. Accordingly, the control unit 120 may extend the unit time for the duration that the moving motion is made, and does not apply the time interval. As a result, the user may keep placing the pointer at a desired location by continuously making a moving motion.

Meanwhile, if a hold motion (i.e., stopping of movement) is recognized in a state that the pointer is fixed at a specific location, the control unit 120 determines that the designated menu is selected and performs the operation corresponding to the menu. In this case, the time interval may be applied upon recognition of the hold motion, so as to prevent erroneous recognition of a movement preparing for the next motion as an effective motion.

Except for the moving motion, the time interval is applicable to the rest of the motions. That is, in order to prevent erroneous recognition of a preparing movement of a user as an effective motion after the first push motion is made, the time interval may be applied upon elapse of the unit time of the first push motion during which the user can get ready to make the following movement.

FIG. 2 is a block diagram of a display apparatus according to various embodiments. Referring to FIG. 2, the display apparatus includes the motion recognition unit 110 and the control unit 120, and additionally includes a tuner unit 130, a signal processing unit 140, an output unit 150, an input unit 160, a voice input unit 170 and a storage unit 180.

The tuner unit 130 tunes to a broadcast signal channel, receives a corresponding broadcast signal, down-converts the received signal and provides the signal to the signal processing unit 140.

The signal processing unit 140 performs signal processing including demodulating, equalizing, decoding, or scaling with respect to the signal provided from the tuner unit 130 and provides the resultant signal to the output unit 150.

The output unit 150 operates to output a video or audio signal processed at the signal processing unit 140 using output devices including a display unit or speaker.

The input unit 160 operates to receive a user select signal according to manipulation of keys provided on the main body of the electronic apparatus 100 or an external remote controller. To be specific, the input unit 160 may include a keypad and an IR signal reception lamp.

The voice input unit 170 operates to receive various voice commands and provide the same to the control unit 120. If the display apparatus 100 supports the voice recognition mode, the voice input unit 170 may additionally be provided, as illustrated in FIG. 2.

In the voice recognition mode, the control unit 120 performs an operation according to a voice command inputted through the voice input unit 170.

The storage unit 180 operates to store various programs or data used in the display apparatus. To be specific, the storage unit 170 may store information about various motions set for motion control and operations matching the motions.

For example, the storage unit 170 may store therein a database in the form exemplified in Table 1 above. The control unit 120 determines which motion is made based on the attributes of a movement of an object recognized through the motion recognition unit 110, and confirms the operation matching the recognized motion from Table 1. As a result, the control unit 120 performs the confirmed operation.

Referring to FIG. 2, the motion recognition unit 110 includes a photographing unit (not illustrated).

The photographing unit may be implemented as a camera which photographs a forward direction of the display apparatus 100. The photographing unit receives the light reflected from various objects located in front and generates photographed image data.

If the push motion is used as in the case of Table 1, the photographing unit may utilize a three-dimensional (3D) depth camera. The 3D depth camera radiates a ray of infrared light, and measures a time for the infrared light to touch on the object and return to thus calculate a distance to the object. The image acquired through the depth camera may be outputted in gray level, and with coordinate values including a horizontal value, a vertical value and distance for each pixel in a frame. As a result, photographed image data with depth information for each pixel is generated.

The control unit 120 analyzes the photographed image data generated at the motion recognition unit 110 and determines the motion of the object. If it is determined that a push motion is made, the control unit 120 may start the motion recognition mode. Whether or not the push motion is made may be determined by checking whether or not the depth information of the pixel group corresponding to the object is changed.

If pre-registered object-related information is available, the control unit 120 compares the size and form of the pixel group with varied depth information with the registered object-related information to determine the similarity between the two. If it is determined that there is similarity and the two match each other, the control unit 120 determines that a push motion is made.

Once the push motion is recognized and the motion recognition mode is initiated, the control unit 120 tracks the movement of a corresponding object and continuously attempts to detect the following motion. In one example, the control unit 120 may compare the frames provided by the motion recognition unit 110, check a distance moved by the object making a push motion, analyze attributes including motion speed or distance, and differently determine the variation unit.

To be specific, the control unit 120 may determine a motion type by comprehensively considering various characteristics including pause period, presence of acceleration, time of movement, total motion recognition time, or the like. More specifically, in recognizing the movement, the control unit 120 may divide the movement based on unit times by applying the time intervals. The value of the unit time or time interval may be fixed based on optimum measurement, or alternatively, adjustable depending on the characteristics of a user. That is, the user may change the values of these time periods by selecting time interval/unit time adjustment menu.

In the various embodiments explained above, the control unit 120 performs photographed image data analysis and performs motion determination based on such data analysis. However, this is only an illustrative example and other examples are possible. For example, a separate determining unit (not illustrated) may be provided inside the motion recognition unit 110 to determine motion types and notify the determined result to the control unit 120. In another example, means for performing such determination may be provided outside the motion recognition unit 110 and the control unit 120.

The control unit 120 may control the tuner unit 130, the signal processing unit 140 and the output unit 150 to perform operations according to the motion determined based on the movement recognized through the motion recognition unit 110.

For example, in a state that the tuner unit 130 is currently tuned to broadcast channel 1, and the signal processing unit 140 and the output unit 150 process and output signals accordingly, upon determination that a swing motion is made, the control unit 120 may control the tuner unit 130 to change a channel according to a direction of the motion. Accordingly, the tuner unit 130 is tuned to a corresponding channel and receives the broadcast signal, and the signal processing unit 140 and the output unit 150 process the newly-received broadcast signal and outputs the resultant signal through a screen and a speaker.

Further, upon determining that a swing motion is made in a state that the content is displayed on a screen, the control unit 120 may control the signal processing unit 140 and the output unit 150 to change to the next screen page.

Further, in the above example, if it is determined that a wave motion is made, the control unit 120 may control the respective parts to change to the upper screen of the current screen. For example, if a wave motion is made during output of a broadcast channel, the current screen may be changed to an initial menu screen on which various menus including broadcast output menu, content output menu, Internet menu or setup menu, can be selected. Further, if a wave motion is made in a state that a lower page of a specific webpage is currently displayed, the page may directly change to the main webpage. If a wave motion is additionally made in this state, the screen may change to the initial menu screen as explained above.

As explained above, the control unit 120 may determine a corresponding motion intended by a movement such as moving, swing and wave motion. The control unit 120 may check a change of image in each frame and discriminately recognize the motion. If an amount of image change in each frame, i.e., if a movement is below a threshold, the control unit 120 determines that one movement is completed. Accordingly, the control unit 120 determines a motion type based on the image change in each frame before the ending.

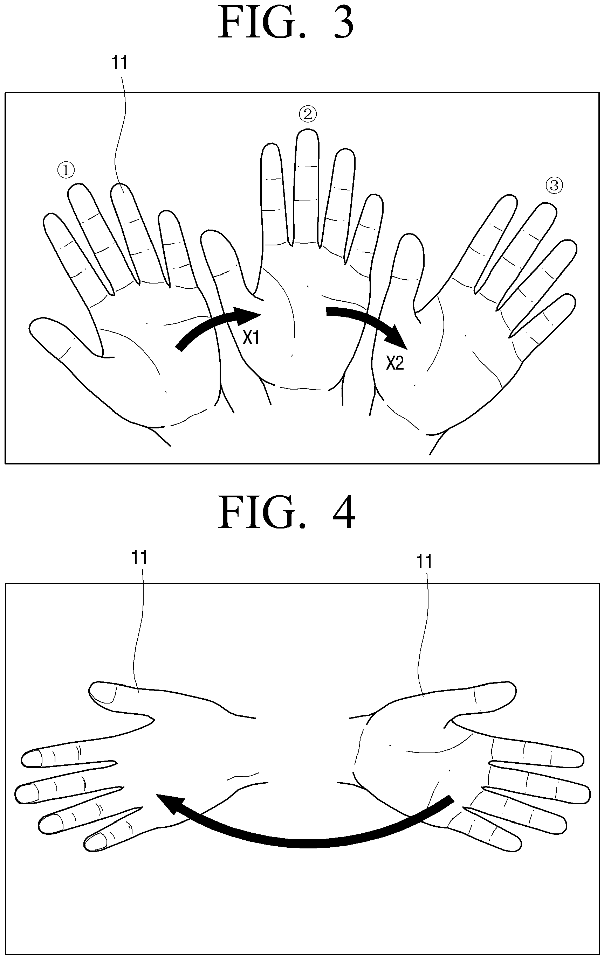

FIG. 3 illustrates a movement of an object. Referring to FIG. 3, the control unit 120 basically determines that a moving motion is made, if the object is located in position ① in the first frame, in position ② in the second frame, and in position ③ in the third frame. Then if the object is displayed in position ③ in the fourth and fifth frames, the control unit 120 determines that the object 11 has stopped moving. As explained above, the control unit 120 does not apply the time intervals while the moving motion is made, and continuously tracks the corresponding movement and moves the pointer accordingly.

Meanwhile, the control unit 120 may check the speed of the movement to determine if a movement is stopped as the moving motion is completed or is paused to make a swing motion. To be specific, the control unit 120 may compute the speed of movement from position ① to ②, and the speed of movement from position ② to ③. If the photographing is done at the rate of 60Hz, the speed (V₁) of movement from position ① to ② is V₁ = 60X₁, i.e., the distance of movement (i.e, X₁ pixel) divided by the time (i.e., 1/60). The speed of movement from ② to ③ is V₂ = 60X₂. The control unit 120 determines that a swing motion is made if V₂ is greater than V₁ by a threshold as a result of comparing V₁ and V₂. However, if V₂ is smaller than V₁ or greater than V₁ but by less than the threshold, the control unit 120 determines that a moving motion has simply stopped. If it is determined that a swing motion is made, the control unit 120 applies the time interval on elapsing of the unit time so that a control operation according to movement recognition is not carried out during the time interval.

FIG. 4 illustrates one example of a swing motion. Referring to FIG. 4, the control unit 120 may recognize a swing motion that turns a page, if the hand 11 moves in one of upper, lower, left and right directions, and then stops. During this process, the control unit 120 may check acceleration as explained above.

Although FIG. 4 illustrates a swing motion as a motion of a user's hand changing from a state where the palm faces the display apparatus 100 to a state where the back of the hand faces the display apparatus 100, the reverse example is applicable as a swing motion. The swing motion may also include a motion in which a hand accelerates with its palm facing the display apparatus 100 and then suddenly stops. Additionally, a swing motion may be recognized if a palm or a back of a hand is not completely turned to face the display apparatus 100.

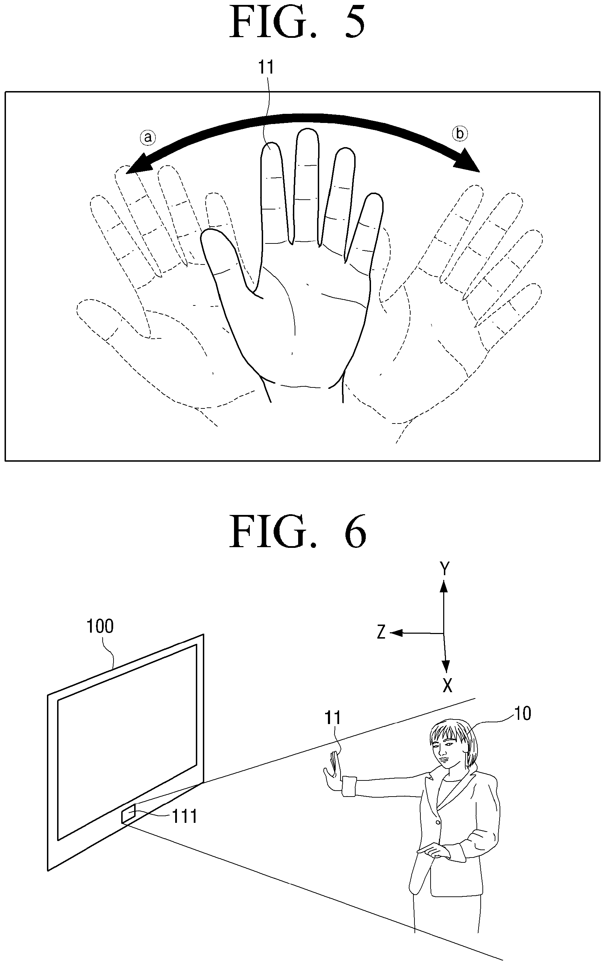

FIG. 5 illustrates an example of a wave motion. Referring to FIG. 5, the control unit 120 may determine that a wave motion is made, if the object 11 reciprocates (in directions a and b) repeatedly within the unit time. The time point to determine the ending of the movement may be set to when a change of image of each frame is below a specific threshold value.

Meanwhile, referring to FIGS. 3 to 5, the movement distance of the object may be determined by searching blocks matching the respective frames and comparing the locations of the searched blocks. That is, the control unit 120 may divide the current and the next frames into a plurality of blocks, respectively, search matching blocks using average pixel values or representative pixel values of the respective blocks, and check the change of location of the searched blocks to thereby compute a distance of movement.

Meanwhile, the movement distance of the object in FIGS. 3 to 5 may be calculated with reference to one spot on the object. That is, it is possible to calculate a distance between a center pixel or center block of a pixel group or pixel group that corresponds to the object among all the blocks of the current frame, and a corresponding center pixel or center block of the next frame.

Meanwhile, the display apparatus 100 according to an embodiment may initiate motion control using other various motions.

FIG. 6 illustrates a push motion as one example of the motion to initiate the motion recognition mode.

The motion recognition unit 110 may recognize a push motion of the object 11 of the user 10 within the photographing range moving in a direction of the display apparatus 100. To be specific, by applying a 3D coordinate system as illustrated in FIG. 6, the motions can be defined by a Y axis running in an upward direction with respect to the display apparatus 100, an X axis arranged perpendicular to the Y axis to face the right side, and a Z axis arranged to extend from a plane formed by the X and Y axes to face the display apparatus 100. The push motion is the motion made in the Z axis direction.

Since the push motion is made in the Z axis direction, in normal mode, the motion recognition unit 110 checks only the change in depth information of the photographed image data to determine whether or not a push motion is made. Accordingly, if the push motion is made and the operation changes to the motion recognition mode, the motion recognition unit 110 checks not only the movement in the Z axis direction, but also the movements in the X and Y axes directions to analyze the movement of the object.

If the push motion is recognized, the control unit 120 determines that the operation is carried out in a motion recognition mode, and accordingly changes to the motion recognition mode. That is, the control unit 120 operates in the normal mode before the push motion is recognized, during which the control unit 120 receives a user select signal according to the user's remote controlling or manipulation of the keys provided on the main body of the display apparatus 100 through the input unit 160, and performs control operation accordingly. Then as the operation changes to the motion recognition mode, the control unit 120 recognizes the user's motion to perform a corresponding operation.

In the above example, the control unit 120 tracks the movement of the object that makes the first push motion, and performs the operation corresponding to the recognized motion.

If the operation changes to the motion recognition mode, the control unit 120 may not accept the inputs other than motion. However, in an alternative embodiment, the control unit 120 may also perform the operation according to remote controlling or manipulation of the keys on the main body as this is inputted, even in the motion recognition mode. Accordingly, the motion recognition mode is not necessarily controlled only by the motion.

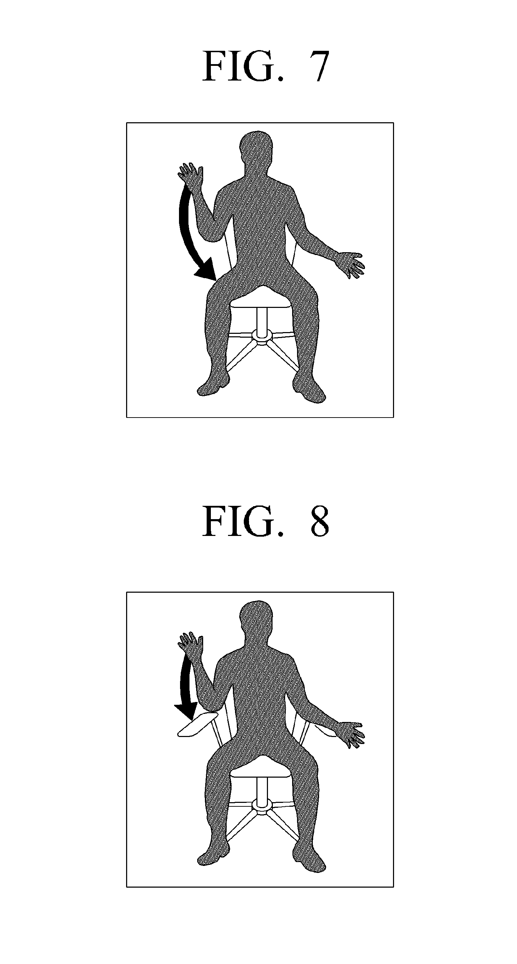

FIGS. 7 and 8 are views illustrating various examples of end motions to end the motion recognition mode. The control unit 120 ends the motion recognition mode if a preset specific motion is recognized at the motion recognition unit 110. All the motions used to end the motion recognition mode will be herein below called an 'end motion'. There can be a variety of end motions. For example, if the object is a palm of the user's hand, the end motion may be the user's hand motion moving to contact the user's body or other object to prevent further recognition of the palm.

FIG. 7 illustrates an example of the end motion in which the user moves his hand down onto his knee or other body part. FIG. 8 illustrates an example of the end motion in which the user moves his hand down onto an object such as an armrest of the chair. Many other end motions are implementable in various ways.

If the motion recognition mode is initiated with the user's push motion and ended with the user's hand-down motion, the user's intention can be interpreted more accurately in the motion recognition control. The push motion may include a push-pull motion of unfolding of a hand in a forward direction and folding back, or a push-stop motion of continuing to unfold a hand in a forward direction.

Many other motion types can be used. That is, operations may be executed in response to a motion making a circle, a character such as a specific letter of an alphabet, or the like.

Letters corresponding to the motions may be registered by default by the provider, or the user may register his own motion using the motion recognition unit 110 to use the registered motion as his personalized motion command.

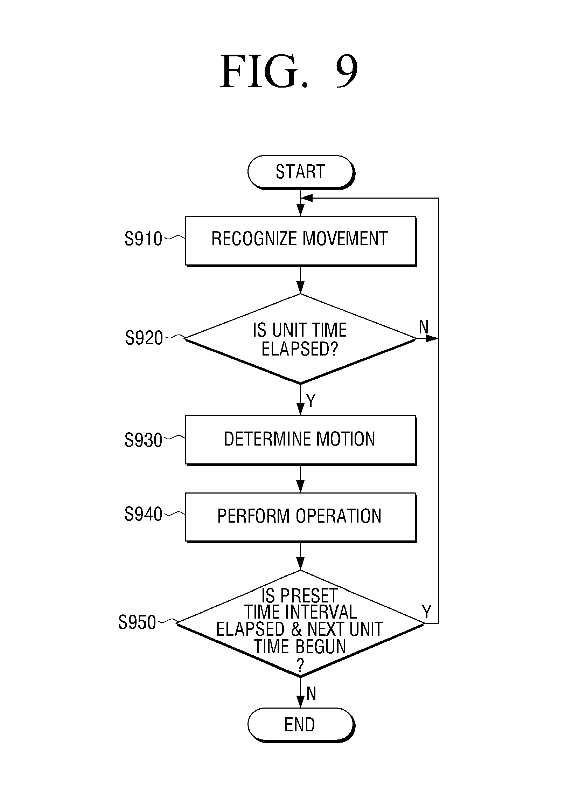

FIG. 9 is a flowchart provided to explain a motion control method of a display apparatus according to an embodiment.

Referring to FIG. 9 in S910, if a movement is recognized, at S920, the movement is tracked until a unit time elapses. At S930, if the unit time elapses, it is determined as to which motion is made, considering various characteristics including direction, frequency, distance and speed of the movement within the unit time. As explained above, the unit time may be determined between 1 to 1.5 seconds, for example.

At S940, if the motion is determined, an operation corresponding to the determined motion is performed. At S950, it is determined whether the preset time interval has elapsed and the next unit time begun. If it is determined that the next unit time starts, the movement is recognized in the next unit time.

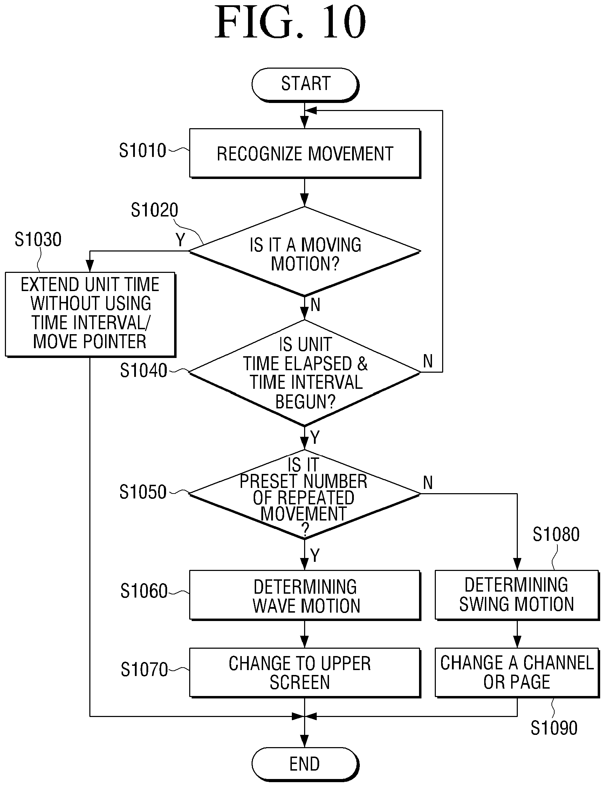

FIG. 10 is a flowchart provided to explain in detail a motion determining method according to an embodiment.

Referring to FIG. 10, at S1010, if a movement is recognized, at S1020, it is determined whether the movement corresponds to a moving motion or not based on the speed of the movement. At S1030, if it is determined that a moving motion is made, the time interval is not applied and the unit time is extended so that the moving motion is continuously tracked to accordingly move the pointer, without applying the time interval. Alternatively, any movement may be basically considered as a moving motion so that the pointer is moved. Whether or not the movement is correctly recognized as the moving motion may then be determined based on the presence of acceleration or the like.

Meanwhile, at S1040, if the movement does not correspond to the moving motion, the movement is tracked in the unit time while it is determined as to whether or not the unit time elapses.

At S1050, if the unit time elapses and the time interval starts, it is determined as to whether or not the movement within the unit time consists of a predetermined number of repeated movements.

At S1060, if the movement consists of a predetermined number of repeated movements, the movement is determined to be a wave motion. Accordingly, at S1070, the operation of changing to an upper channel or page may be performed.

On the contrary, at S1080, if the movement does not consist of a predetermined number of repeated movements, the movement is determined to be a swing motion. Accordingly, at S1090, the operation of changing a channel or page may be performed.

Meanwhile, if the time interval elapses during the operation according to the determined motion, the process of recognizing movement repeats in the next unit time. This motion control method continues until the motion recognition mode is inactivated.

According to a motion control method in one embodiment, various hand movements such as a moving motion, a swing motion or a wave motion can be detected accurately, since the respective movements are divided by unit times by the use of time intervals, and the characteristics of the divided movements are comprehensively taken into account.

Meanwhile, FIGS. 9 and 10 are flowcharts provided to explain steps performed after the operation enters into the motion recognition mode. Accordingly, in one embodiment, the motion control method may additionally include determining whether or not a push motion is made during normal mode, and if determining so, entering into the motion recognition mode; and ending the motion recognition mode if recognizing an end motion.

Further, the steps illustrated in FIGS. 9 and 10 may not necessarily be performed in the illustrated order. That is, some steps may be exchanged with each other.

Further, the motion control method of FIGS. 9 and 10 may be implemented in not only the display apparatus as illustrated in FIGS. 1 and 2, but also in various electronic apparatus with varied structures and components.

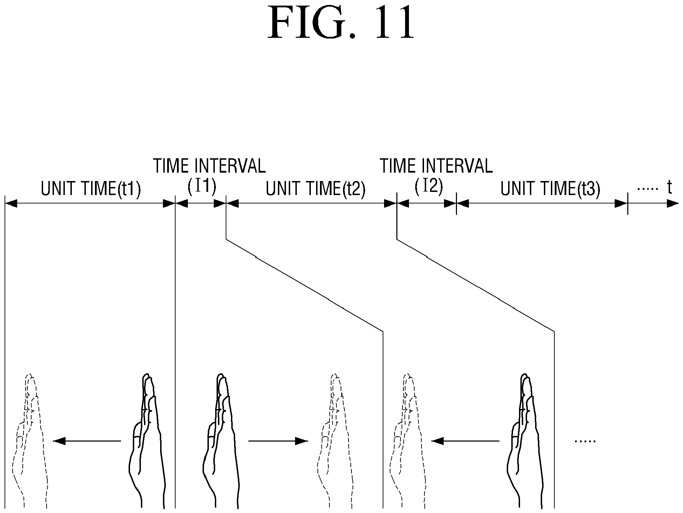

FIG. 11 is a view provided to explain a process of separately recognizing a movement by applying a time interval, according to various embodiments. Referring to FIG. 11, if a swing motion of swinging a hand to one direction is recognized in the first unit time (t1), the movement is not recognized in the next time interval (l1). The user may return his hand to the original position during the time interval (l1). Accordingly, the user may make another swing motion in one direction in the next unit time (t2). As a result, since the photographing device recognizes two swing motions, operation corresponding to the swing motion is performed two times.

Meanwhile, referring to FIG. 11, the unit times (t1, t2, ...) may be set to uniform value (i.e., t1=t2=t3...), and the time intervals (l1, l2, ...) may also be set to uniform value (i.e, l1=l2=...). To be specific, the unit time may have a value of approximately 1 second, and the time interval may have a value approximately of 300 msec, although these figures may vary.

Meanwhile, if a moving motion is recognized, the unit time may be extended.

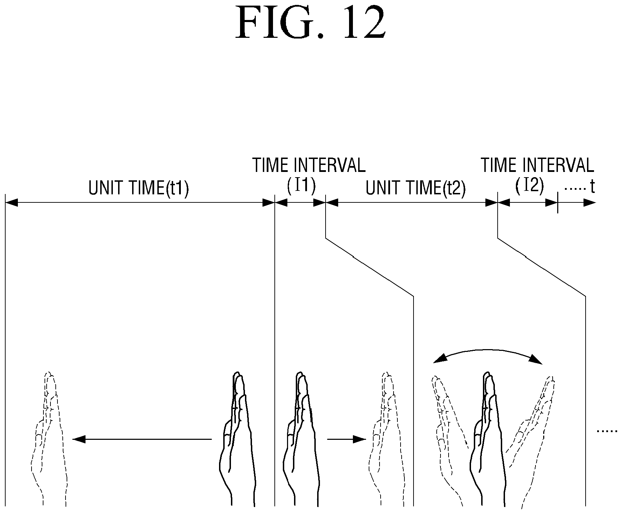

FIG. 12 illustrates unit times and time intervals in a case when a moving motion is recognized.

Referring to FIG. 12, if a user makes a moving motion of continuously moving his hand with a predetermined speed, the unit time is extended and the use of the time interval is omitted. Accordingly, t1 and t2 are in the relationship of t1 > t2. If the moving motion is finished, the second unit time (t2) starts after the time interval (l1). If the user waves his hand in both directions in the second unit time, the photographing device counts the number of repeated movements in the unit time (t2) to determine if a wave motion is being made. According to the result of determination, operation corresponding to the wave motion may be performed.

Program codes to execute the motion control method according to an embodiment may be recorded in various types of recording media. To be specific, the program codes may be recorded in various types of recording media which are readable by a terminal, which may include random access memory (RAM), flash memory, read only memory (ROM), erasable programmable ROM (EPROM), electronically erasable and programmable ROM (EEPROM), register, HDD, removable disk, memory cad, USB memory, or CD-ROM.

Accordingly, if the recording medium recording therein the program codes is connected to or mounted in various apparatuses that are capable of recognizing motions, the motion control method according to embodiments can be supported.

The foregoing exemplary embodiments and advantages are merely exemplary and are not to be construed as limiting the present invention. The present teaching can be readily applied to other types of apparatuses. Also, the description of the exemplary embodiments of the present inventive concept is intended to be illustrative, and not to limit the scope of the claims, and many alternatives, modifications, and variations will be apparent to those skilled in the art.

## Claims

1. A display apparatus (100), comprising:
a motion recognition unit (110) which recognizes a movement of an object (11) located outside the display apparatus (100);
a storage unit (180) which stores therein information about the operation corresponding to each motion; and
a control unit (120) which divides a movement recognition period (t1, t2, t3) using a movement nonrecognition period (l1, l2), determines a motion corresponding to a movement of the object (11) within the movement recognition period (t1, t2, t3), and performs an operation corresponding to the determined motion according to information stored in the storage unit (180).

2. The display apparatus (100) of claim 1, further comprising:
an output unit (150) which performs displaying according to a control by the control unit (120).

3. The display apparatus (100) of claim 2, wherein, if the movement is determined to be a moving motion (X₁, X₂) based on the speed of the movement, the control unit (120) extends a value of the movement recognition period (t1, t2, t3) during which the moving motion (X₁, X₂) is made, omits the use of the movement nonrecognition period (l₁, l₂), and controls the output unit (150) to move a pointer on a screen according to a direction of the movement of the moving motion (X₁, X₂).

4. The display apparatus (100) of claim 2, wherein the control unit (120) determines the movement to be one wave motion, if the object (11) performs a plurality of reciprocating movements in the movement recognition period (t1, t2, t3).

5. The display apparatus (100) of claim 4, wherein the control unit (120) controls the output unit (150) to change to a previous or upper screen, if the control unit (120) determines the movement to be the wave motion.

6. The display apparatus (100) of claim 2, wherein the control unit (120) determines the movement to be one swing motion, if the object (11) moves with acceleration in one direction and then stops in the movement recognition period (t1, t2, t3).

7. The display apparatus (100) of claim 6, wherein the control unit (120) performs an operation of changing a channel or page, if the control unit (120) determines the movement to be the swing motion.

8. The display apparatus (100) of claim 1, wherein the movement nonrecognition period (l1, l2) is disposed between two movement recognition periods (t1, t2, t3) and during which a movement of the object (11) is not recognized, and the movement recognition period (t1, t2, t3) is a time required for recognizing a motion corresponding to a movement of a subject (10).

9. A motion control method of a display apparatus (100), comprising:
recognizing a movement of an object (11) located outside the display apparatus (100); and
dividing a movement recognition period (t1, t2, t3) using a movement nonrecognition period (l1, l2) and determining a motion corresponding to a movement of the object (11) within the movement recognition period (t1, t2, t3); and
performing an operation according to the determined motion.

10. The motion control method of claim 9, wherein the determining the motion comprises determining the movement to be a moving motion (X₁, X₂) if the movement is made at a constant speed, extending a value of the movement recognition period (t1, t2, t3) during which the moving motion (X₁, X₂) is made, and omitting the use of the movement nonrecognition period (l1, l2), and
the performing the operation comprises moving a pointer on a screen according to a direction of the movement of the moving motion (X₁, X₂).

11. The motion control method of claim 9, wherein the determining the motion comprises determining the movement to be one wave motion, if the object (11) performs a plurality of reciprocating movements in the movement recognition period (t1, t2, t3).

12. The motion control method of claim 11, wherein the performing the operation comprises changing to a previous or upper screen, if the movement is determined to be the wave motion.

13. The motion control method of claim 9, wherein the determining the motion comprises determining the movement to be one swing motion, if the object (11) moves with acceleration in one direction and then stops in the movement recognition period (t1, t2, t3).

14. The motion control method of claim 13, wherein the performing the operation comprises performing an operation of changing a channel or page, if the movement is determined to be the swing motion.

15. The motion control method of claim 9, wherein the movement nonrecognition period (l1, l2) is disposed between two movement recognition periods (t1, t2, t3) and during which a movement of the object (11) is not recognized, and the movement recognition period (t1, t2, t3) is a time required for recognizing a motion corresponding to a movement of the subject (10).
